(19) Europäisches Patentamt / European Patent Office / Office européen des brevets

(11) **EP 3 781 636 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **19716163.1**

(22) Anmeldetag: **10.04.2019**

(51) Internationale Patentklassifikation (IPC):
**C09J 11/08** (2006.01)   **C09J 133/06** (2006.01)
**C09J 133/08** (2006.01)   **C09J 135/02** (2006.01)
**C09J 135/06** (2006.01)   **B32B 27/08** (2006.01)
**B32B 27/16** (2006.01)   **B32B 27/28** (2006.01)
**B32B 27/32** (2006.01)   **B32B 27/34** (2006.01)
**B32B 27/36** (2006.01)   **B32B 23/08** (2006.01)
**B32B 15/09** (2006.01)   **B32B 15/20** (2006.01)
**B32B 7/12** (2006.01)   **B32B 23/04** (2006.01)
**B32B 15/088** (2006.01)   **B32B 15/085** (2006.01)
**B32B 37/12** (2006.01)

(52) Gemeinsame Patentklassifikation (CPC):
(C-Sets verfügbar)
**B32B 23/08; B32B 7/12; B32B 15/085;**
**B32B 15/088; B32B 15/09; B32B 15/20;**
**B32B 23/04; B32B 23/042; B32B 27/08;**
**B32B 27/16; B32B 27/28; B32B 27/32;**
**B32B 27/325; B32B 27/34; B32B 27/36;**   (Forts.)

(86) Internationale Anmeldenummer:
**PCT/EP2019/059040**

(87) Internationale Veröffentlichungsnummer:
**WO 2019/201695 (24.10.2019 Gazette 2019/43)**

(54) **ADDITIVZUSAMMENSETZUNG FÜR WÄSSRIGE DISPERSIONEN HYDROPHOBER POLYMERE**

ADDITIVE COMPOSITION FOR AQUEOUS DISPERSIONS OF HYDROPHOBIC POLYMERS

COMPOSITION ADDITIVE POUR DES DISPERSIONS AQUEUSES DES POLYMÈRES HYDROPHOBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2018 EP 18168541**

(43) Veröffentlichungstag der Anmeldung:
**24.02.2021 Patentblatt 2021/08**

(73) Patentinhaber: **BASF SE**
**67056 Ludwigshafen am Rhein (DE)**

(72) Erfinder:
• **HOEVEL, Bernd**
  **67056 Ludwigshafen (DE)**
• **SCHUMACHER, Karl-Heinz**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-B1- 0 941 259     WO-A1-2017/125277**

• **DATABASE WPI Week 201722 Thomson Scientific, London, GB; AN 2017-09667U XP002791147, -& CN 106 349 977 A (VALENCE BOND MATERIAL SHANGHAI CO LTD) 25. Januar 2017 (2017-01-25)**
• **DATABASE WPI Week 201813 Thomson Scientific, London, GB; AN 2018-09864M XP002791148, -& CN 107 619 647 A (WUHAN HUALIN ADHESIVE CO LTD) 23. Januar 2018 (2018-01-23)**

(52)  Gemeinsame Patentklassifikation (CPC): (Forts.)
**C09J 11/08; C09J 133/06; C09J 133/08;**
**C09J 135/02; C09J 135/06;** B32B 37/12;
B32B 2250/02; B32B 2255/06; B32B 2255/10;
B32B 2255/205; B32B 2255/26; B32B 2307/412;
B32B 2307/73; B32B 2307/75; B32B 2405/00;
C08K 3/36; C08K 5/41; C08K 9/06

C-Sets
C08F 220/1804

## Beschreibung

Die Erfindung betrifft Zusammensetzungen enthaltend eine Entschäumer-/Benetzungsmittelmischung basierend auf aromaten-freien Weiss-Ölen oder natürlichen Fettsäureölen und hydrophoben Partikeln, bestimmte langkettige Di- oder Monoalkylsulfosuccinate und bestimmte Ethylenoxid/Propylenoxid Blockcopolymere. Beschrieben werden auch wässrige Dispersionen hydrophober Polymere, welche diese Zusammensetzungen enthalten und die Verwendung der wässrigen Polymerdispersionen als Klebstoff, z.B. zur Herstellung von Verbundfolien aus transparenten Polymerfolien.

Von Interesse sind Additive oder Additivzusammensetzungen die geeignet sind als Formulierungszusatz für hydrophobe, emulgatorarme wässrige Emulsionspolymerisate zur Herstellung von möglichst störungsfreien Klebstoffbeschichtungen. Wässerige Emulsionspolymerisate werden als Kaschier- oder Haftklebstoff mittels geeigneter Auftragssysteme auf Trägerfolien aufgetragen und sollen, insbesondere wenn die Trägerfolien transparent sind, ein möglichst störungsfreies klares Beschichtungsbild ergeben. In üblichen Auftragssystem (z. B. Gravurwalzen, Flexodruck, Düsen, Curtain Coater) besteht die Gefahr, dass die Emulsionspolymerisate durch mechanische Einwirkungen (Pumpen, rotierende Walzen) Schaum entwickeln, der sich als erkennbare Struktur im getrockneten Film störend bemerkbar macht. Eine weitere Ursache für unerwünschte Strukturen im Beschichtungsbild kann darin liegen, dass das wässerige Emulsionspolymerisat die Trägerfolie nicht vollflächig benetzt. Dieses Problem tritt insbesondere bei hydrophoben Folienoberflächen auf.

Um unerwünschte Filmstrukturen durch Schaum oder mangelnde Benetzung zu vermeiden, setzt man den Emulsionspolymerisaten üblicherweise ein Formulierungspaket aus Entschäumungsmitteln und Netzmitteln zu. Hierbei sind folgende Risiken zu betrachten: da das Netzmittel eine amphiphile Struktur aufweist, trägt es selbst zur Schaumentwicklung bei. Das Entschäumungsmittel neigt andererseits dazu, Benetzungsstörungen zu erzeugen oder im Dispersionsfilm durch Separierung eine orangenhautähnliche Struktur zu erzeugen. Daher kommt der Auswahl geeigneter Komponenten eine besondere Bedeutung zu. Eine weitere Herausforderung liegt darin, dass das Formulierungspaket auch über eine längere Lagerzeit des wässerigen Klebstoffs wirksam bleibt. Dies ist nicht gegeben, wenn sich das Entschäumungsmittel im wässrigen Klebstoff separiert, indem es sich z. B. an der Oberfläche der Klebstoffpolymerpartikel anreichert, und dann auch nicht durch Rühren wieder homogenisiert werden kann. Dieses Problem tritt insbesondere dann auf, wenn die Emulsionspolymerisate hydrophob sind und mit wenig Emulgator stabilisiert werden. Hydrophobe, emulgatorarme Polymerdispersionen werden vor allem als Kaschierklebstoffe in der Verbundfolienkaschierung eingesetzt, weil sie hohe Klebfestigkeiten erzeugen und zudem meist kostengünstig herzustellen sind. Insbesondere Kombinationen aus n-Butylacrylat und Styrol sind hier zu finden.

Als Entschäumer sind z. B. Silikonentschäumer oder Mineralölentschäumer bekannt. Bei hydrophoben Polymerdispersionen (definiert durch eine freie Oberflächenenergie der getrockneten Polymerfilme von kleiner 35 mN/m) führt der Einsatz von Silikonentschäumern häufig zu deutlich sichtbaren Strukturen im getrockneten Polymerfilm (siehe Tabelle 1). Mineralölentschäumer zeigen zwar dieses Problem nicht, neigen aber in den hydrophoben Polymerdispersionen zu einer schnellen Separation und sind häufig nach einigen Tagen nicht mehr homogenisierbar, was aber eine Voraussetzung für die Unterdrückung des Schaums ist. Ölentschäumer, welche Wachspartikel enthalten, sind stark hydrophob und deshalb zum einen sehr schwer in die Polymerdispersionen einzuarbeiten und zum anderen neigen diese Materielien dazu Filmstörungen zu verursachen (siehe Tabelle 1). Deshalb kommt der Auswahl des Benetzungsmittels eine wichtige Bedeutung zu, um solche Entschäumer erfolgreich verwenden zu können. Dialkylsulfosuccinate sind als Emulgatoren bekannt. Reguläre Sulfosuccinate mit kürzeren Fettsäureresten wie z. B. Di-Hexyl-, und Di-Iso-Octyl-Sulfosuccinat haben sich aber als stark schäumend herausgestellt für die Einarbeitung der stark hydrophoben Weissöl/Wachs-Entschäumer in wässrige Polymerdispersionen (siehe Tabelle 2). Sulfosuccinate mit höheren Fettsäureketten können zwar ausreichend emulgierend sein und schäumen deutlich weniger, sie sind aber leider nicht immer in der Lage, eine vollständige Benetzung von Polymerfoliensubstraten zu gewährleisten.

Die EP 2 930 206 A1 beschreibt wässrige Polymerdispersionen, welche Polyethylenoxid als Additiv enthalten. Die EP 0 878 224 A1 beschreibt Entschäumerverbindungen aus alkoxylierten Partialestern von Oligoglycerinen zur Entschäumung von Polymerdispersionen und wässrigen Lacksystemen. EP 0 322 830 beschreibt einen Entschäumer auf Basis einer Öl-in-Wasser-Emulsion. US2013/0160676 A1 beschreibt ein entschäumendes Benetzungsmittel auf Basis von EO-PO Block Co-Polymeren für wässrige Beschichtungssysteme. WO 2017/125277 offenbart acrylat-basierte Kaschierklebstoffe. Diese werden mit Emulgatoren kombiniert, beispielsweise werden Natrium-sulfosuccinat/Isotridecanolethoxylat, Fettalkoholpolyglycolether-sulfat oder Natrium Alkyl(C10-C13)benzensulfonat verwendet. Als übliche Hilfsstoffe können Netzmittel und Entschäumer eingesetzt werden.

Es bestand daher die Aufgabe, ein Formulierungspaket für hydrophobe wässrige Polymerdispersionen zur Verfügung zu stellen, welches sowohl eine gute entschäumende Wirkung hat, eine möglichst gute Benetzung von Polymerfolien gewährleistet und eine möglichst störungsfreie Beschichtung von Polymerfolien, insbesondere für die Herstellung von transparenten Verbundfolien gewährleistet.

Die Aufgabe wurde gelöst durch eine Zusammensetzung enthaltend

(A) mindestens eine Entschäumermischung enthaltend (i) mindestens ein Öl ausgewählt aus aromaten-freien Weiss-Ölen und natürlichen Fettsäureölen und (ii) hydrophoben Partikeln, vorzugsweise Wachspartikel oder hydrophobisierte Silica-Partikel;

(B) mindestens ein Di- oder Monoalkylsulfosuccinat, wobei die Alkylgruppen jeweils mindestens 9 C-Atome aufweisen; und

C) mindestens ein Ethylenoxid/Propylenoxid Blockcopolymer mit einem Molekulargewicht von 1000 bis 3000 und einem Ethylenoxidanteil von 10 bis 40 Gew.-%, vorzugsweise von 15 bis 30 Gew.-%, bezogen auf das Blockcopolymer.

Das Molekulargewicht lässt sich aus der OH-Zahl berechnen.

Zur Entschäumung von hydrophoben Polymerdispersionen müssen die Entschäumer ausreichend hydrophob sein, um eine geeignete Entschäumung zu gewährleisten und sie müssen hinreichend kompatibel sein, um eine Langzeitstabilisierung der Entschäumung zu gewährleisten und nicht über die Zeit zu separieren. Dabei haben sich erfindungsgemäß Entschäumer als erfolgreich herausgestellt, die neben Mineralölen (vorzugsweise Weißölen) auch emulgierte Wachspartikel anstatt von sonst üblichen Silikapartikeln als zusätzlichen Bestandteil aufweisen. Überraschenderweise waren solche Entschäumer auch Silikonölentschäumern überlegen, die nach einiger Zeit Ihre Wirksamkeit verlieren (siehe Tabelle 4.2). Es wird vermutet, das die Wachspartikel längeren Bestand haben und nicht von den Polymerdispersionspartikeln separiert werden.

Allerdings sind solche Entschäumer zum einen sehr schwer einzuarbeiten und zum anderen neigen diese Materielien dazu Filmstörungen zu verursachen, wenn sie ohne weitere Massnahmen eingesetzt weden (siehe Tabelle 1, Versuche 4 und 5). Deshalb kommt der Auswahl von Benetzungsmitteln eine besondere Bedeutung zu, um solche Entschäumer erfolgreich verwenden zu können. Sulfosuccinate mit kürzeren Fettsäureresten wie z. B. Di-Hexyl-, und Di-Iso-Octyl-Sulfosuccinat haben sich als nicht ausreichend emulgierend herausgestellt für die Einarbeitung der stark hydrophoben Weissöl/Wachs-Entschäumer in wässrige Polymerdispersionen. Sulfosuccinate mit höheren Fettsäureketten wie z. B. Di-Dodecyl-Sulfosuccinat wurden zwar erfolgreich als ausreichend emulgierend getestet, haben sich aber als unzureichend herausgestellt für eine vollständige Benetzung von Polymerfoliensubstraten mit hydrophoben wässrigen Polymerdispersionen, wenn sie ohne weitere Massnahmen eingesetzt werden (siehe Tabelle 2).

Es wurde nun gefunden, dass solche höher kettigen Sulfosuccinate erfolgreich mit niedrig molekulargewichtigen Propylenoxid/Ethylenoxid-Blockcopolymeren (Molekulargewicht von 1000-3000 Da) kombiniert werden können.

Insbesondere konnte eine gute Benetzung mit Propylenoxid/Ethylenoxid-Blockcopolymeren mit 20-30 Gew.-% Ethylenoxidanteil erzielt werden. Dies ist besonders überraschend, da diese Klasse von Materialien für sich alleine genommen keine geeignete Substratbenetzung zu erreichen vermag, da die Oberflächenspannung dieser Block-Polyether (gemessen in wässriger Lösung) relativ hoch bei ca. 40 - 41 mN/m liegt und damit noch über der freien Oberflächenenergie der hydrophoben Polymere der wässrigen Polymerdispersion.

Das Gewichtsverhältnis von Entschäumermischung (A), Di- oder Monoalkylsulfosuccinat (B) und Ethylenoxid/Propylenoxid Blockcopolymer (C) beträgt vorzugsweise 0,8 bis 1,2 Gewichtsteile, vorzugsweise 0,9 bis 1,1 Gewichtsteile Entschäumermischung (A), 1,6 bis 2,4 Gewichtsteile, vorzugsweise 0,9 bis 1,1 Gewichtsteile des mindestens einen Di- oder Monoalkylsulfosuccinats (B) und 0,8 bis 1,2 Gewichtsteile, vorzugsweise 0,9 bis 1,1 Gewichtsteile des mindestens einen Ethylenoxid/Propylenoxid Blockcopolymers (C).

Die erfindungsgemäße Zusammensetzung enthält eine Entschäumermischung enthaltend (i) mindestens ein Öl ausgewählt aus aromaten-freien Weiss-Ölen und natürlichen Fettsäureölen und (ii) hydrophobe Partikel wie z.B. Wachspartikel. Weißöle sind bei Raumtemperatur flüssige Kohlenwasserstoffe, z.B. Paraffinöle, hauptsächlich bestehend aus Alkanen und Cycloalkanen. Die Mengen an Weißölen und Fettsäureölen der Entschäumermischung ist vorzugsweise von 80 bis 90 Gew.-%. Die Mengen an hydrophoben Partikeln in der Entschäumermischung ist vorzugsweise von 1 bis 9 Gew.-%. Die Entschäumermischung kann zusätzlich noch Additive und Lösemittel enthalten, z.B. bis zu 1-5 Gew.-% oberflächenaktive Stoffe wie z. B. Alkylethoxylate oder Glycerinether oder bis zu 1-5 Gew.-% Lösemittel wie z.B. Polypropylenglykol.

Weißöle sind gereinigte Mischungen von flüssigen, transparenten, gesättigten Kohlenwasserstoffen (sogenanntes weißes Mineralöl mit der CAS-Nummer 8042-47-5).

Hydrophobe Partikel sind Partikel, die die eine freie Oberflächenenergie von vorzugsweise kleiner oder gleich 25 mN/m haben. Typische hydrophobe Partikel sind z. B. Wachspartikel, vorzugsweise mikronisierte Wachse wie z.B. Distearylethylendiamid, Paraffinwachse, Esterwachse, Fettalkoholwachse und Fettsäureamide. Bevorzugt ist Paraffinwachs. Eine Gruppe von bevorzugten Verbindungen sind Polyethylenwachse mit einem gewichtsmittleren Molekulargewicht von vorzugsweise mindestens 2000. Die Polyethylenwachse haben einen Schmelzpunkt von vorzugsweise größer 90 °C. Geeignete hydrophobe Partikel sind auch hydrophobisierte Silica-Partikel, Fettsäuresalze z.B. Calciumseifen, insbesondere Calciumstearat) und Polytetrafluorethylene (PTFE) Partikel. Besonders bevorzugt sind Wachspartikel und hydrophobisierte Silica-Partikel.

Geeignete Entschäumermischungen sind z. B. Foamaster® WO 2310, Foamaster® WO 2323 und Foamaster®

EP 3 781 636 B1

NO 2331.

Die erfindungsgemäße Zusammensetzung enthält mindestens ein Di- oder Monoalkylsulfosuccinat, wobei die Alkylgruppen jeweils mindestens 9 C-Atome aufweisen. Dialkylsulfosuccinate sind Salze von Sulfobersteinsäuredialkylestern. Bevorzugt sind Metallsalze, insbesondere Alkalimetallsalze, besonders bevorzugt das Natriumsalz. Die Alkylgruppen weisen vorzugsweise mindestens 10 C-Atome auf, z. B. 10 bis 20 C-Atome oder 10 bis 14 C-Atome, besonders bevorzugt 10 oder 12-C-Atome. Bevorzugte Alkylgruppen sind Decyl, Isodecyl und Dodecyl. Besonders bevorzugt sind die Natriumsalze von Di-isodecylsulphosuccinat und Didodecylsulphosuccinat. Die Di- oder Monoalkylsulfosuccinate weisen vorzugsweise ein Molekulargewicht von größer als 500 auf.

Die erfindungsgemäße Zusammensetzung enthält mindestens ein Ethylenoxid/Propylenoxid Blockcopolymer mit einem Molekulargewicht von 1000 bis 3000, vorzugsweise 1500 bis 3000 oder 2000 bis 3000 (bestimmbar über die OH-Zahl) und einem Ethylenoxidanteil von 10 bis 40 Gew.-%, vorzugsweise 15 bis 30 Gew.-%, bezogen auf das Blockcopolymer.

Geeignete Ethylenoxid/Propylenoxid Blockcopolymere sind z.B. Poloxamere. Poloxamere sind tensidartige Blockcopolymere aus Ethylenoxid und Propylenoxid mit einem zentralen Polypropylenoxid-Teil, der an beiden Kettenenden mit jeweils einem Polyethylenoxidteil verknüpft ist. Der Polyethylenoxidteil des Polymers ist dabei wasserlöslich, der Polypropylenoxidteil jedoch nicht, so dass sich amphiphile Eigenschaften ergeben. Je nach Ethoxylierungsgrad sind sie flüssig, pastös oder fest.

Geeignete Blockcopolymere sind z. B. solche der allgemeinen Formel

$$HO^-(CH_2CH_2O^-)_a\text{-}(CH(CH_3)CH_2O\text{-})_b(CH_2CH_2O\text{-})_a\text{-}H$$

Wobei a größer oder gleich 2, vorzugsweise größer oder gleich 8 ist und den Ethoxylierungsgrad angibt und b größer oder gleich 2, vorzugsweise größer oder gleich 30 ist und den Propoxylierungsgrad angibt, z.B. a = 5 bis 15 und b = 10 bis 50, vorzugsweise sind a von 8 bis 13 und b von 20 bis 40. Besonders bevorzugt ist die Anzahl an Ethylenoxideinheiten kleiner als die Anzahl der Propylenoxideinheiten. Bevorzugt sind Ethylenoxid/Propylenoxid Blockcopolymere mit einer Oberflächenspannung von größer oder gleich 40 mN/m, besonders bevorzugt von 40 bis 45 mN/m, gemessen in Lösung in destilliertem Wasser bei Raumtemperatur (23°C) und bei einer Konzentration von 1 g/l gemäß DIN EN 14370:2004-11. Vorzugsweise ist der Trübungspunkt gemäß DIN EN 1890:2006 der Ethylenoxid/Propylenoxid Blockcopolymere größer als 23°C, besonders bevorzugt von 27 bis 36°C. Ethylenoxid/Propylenoxid Blockcopolymere sind kommerziell erhältlich z.B. unter der Bezeichnung Pluronic® oder Hydropalat®, z.B. Hydropalat® WE 3161, WE 3162 oder WE 3164.

Die erfindungsgemäßen Zusammensetzungen werden vorzugsweise verwendet als Formulierungsadditiv für wässrige Dispersionen hydrophober Polymere (nachfolgend Polymerdispersionen genannt). Hydrophobe Polymere im Sinne der Erfindung sind Polymere mit einer freien Oberflächenenergie von kleiner als 35 mN/m. Bei der freien Oberflächenenergie handelt es sich um die per Randwinkelmessungen mit Referenzflüssigkeiten bestimmte freie Oberflächenenergie der getrockneten Dispersionsfilme (Messung siehe Beispiele), die mit der Oberflächenenergie der Dispersionsteilchen eng korreliert.

Die Polymerdispersionen sind vorzugsweise emulgatorarm in dem Sinne, dass sie weniger als 1 Gew.-% an Emulgatoren enthalten, welche von den Komponenten (B) und (C) verschieden sind und eine Oberflächenspannung kleiner 25 mN/m aufweisen.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur wird durch Differential Scanning Calorimetrie (ASTM D 3418-08, sogenannte "midpoint temperature") bestimmen. Die Glasübergangstemperatur des Polymerisats der Polymerdispersion ist die bei Auswertung der zweiten Heizkurve (Heizrate 20° C/min) erhaltene Glasübergangstemperatur.

Die Messung von Teilchendurchmessern und Teilchengrößenverteilung erfolgt durch Photonenkorrelationsspektroskopie (ISO-Norm 13321:1996).

Die wässrige Polymerdispersion enthält vorzugsweise mindestens ein Polymer das hergestellt ist aus

a) mindestens 60 Gew.-%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe; und
c) optional mindestens einem weiteren, von den Monomeren a) und b) verschiedenen Monomer.

5

Monomere a)

Die Monomerenmischung besteht vorzugsweise aus mindestens 60 Gew.-%, bevorzugt zu mindestens 80 Gew.-%, z. B. von 80 bis 99,9 Gew.-%, besonders bevorzugt zu mindestens 90 Gew.-% bezogen auf die Gesamtmenge an Monomeren, aus mindestens einem Monomeren a) ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

Geeignete Monomere a) sind z.B. (Meth)acrylsäurealkylester mit einem $C_1$-$C_{10}$-Alkylrest, wie Methylme-thacrylat, Methylacrylat, n-Butylacrylat, Ethylacrylat und 2-Ethylhexylacrylat sowie Behenyl(meth)acrylat, Isobutylacrylat, tert.-Butyl(meth)acrylat und Cyclohexyl(meth)acrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Monomere a) bevorzugt sind die $C_1$- bis $C_{10}$-Alkyl-acrylate und -methacrylate, insbesondere $C_1$- bis $C_8$-Alkylacrylate und -methacrylate sowie Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat, Styrol sowie Mischungen dieser Monomere.

Vorzugsweise werden die Monomere a) in einer Menge von mindestens 80 Gew.-%, bezogen auf die Gesamtmenge der Monomere, eingesetzt und sind ausgewählt aus der Gruppe bestehend aus C1- bis C10-Alkylacrylaten, C1-bis C10-Alkylmethacrylaten, Styrol und deren Gemisch. Vorzugsweise handelt es sich um ein Styrol/(Meth)acrylat Copolymer, d. h. die Monomer a) umfassen sowohl Styrol als auch mindestens ein (Meth)acrylsäurealkylestermonomer.

Vorzugsweise werden 80 bis 90 Gew.-%, bezogen auf die Gesamtmenge an Monomeren, an mindestens einem weichen C2- bis C20-Alkyl(meth)acrylatmonomer (a1) eingesetzt, welches, wenn es als Homopolymer polymerisiert ist, eine Glasübergangstemperatur von weniger als 0°C aufweist.

Vorzugsweise werden 1 bis 15 Gew.-%, bezogen auf die Gesamtmenge an Monomeren, an mindestens einem harten C1- bis C20-Alkyl(meth)acrylatmonomer (a2) eingesetzt, welches, wenn es als Homopolymer polymerisiert ist, eine Glasübergangstemperatur von mehr als 0°C aufweist.

Vorzugsweise werden 1 bis 5 Gew.-% Styrol eingesetzt.

Monomere b)

Die Monomerenmischung enthält vorzugsweise mindestens 0,1 Gew.-%, insbesondere von 0,1 bis 5 Gew.% oder von 0,5 bis 5 Gew.%, bezogen auf die Gesamtmenge an Monomeren, mindestens ein ethylenisch ungesättigtes Monomer mit mindestens einer Säuregruppe (Säuremonomer). Die Säuremonomere b) umfassen sowohl Monomere, die wenigstens eine saure Gruppe enthalten, als auch deren Anhydride und deren Salze. Zu den Monomeren b) zählen alpha,beta-monoethylenisch ungesättigte Mono- und Dicarbonsäuren, Halbester von alpha, betamonoethylenisch ungesättigten Dicarbonsäuren, die Anhydride der vorgenannten alpha, betamonoethylenisch ungesättigten Carbonsäuren sowie ethylenisch ungesättigte Sulfonsäuren, Phosphonsäuren oder Dihydrogenphosphate und deren wasserlösliche Salze, z. B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugte Monomere b) sind alpha,beta-monoethylenisch ungesättigte C3-C8-Carbonsäuren und C4-C8-Dicarbonsäuren, z. B. Itaconsäure, Crotonsäure, Vinylessigsäure, Acrylamidoglykolsäure, Acrylsäure und Methacrylsäure, sowie deren Anhydride. Besonders bevorzugte Monomere b) sind Itaconsäure, Acrylsäure und Methacrylsäure.

Die Säuregruppen des Monomers b) können mit geeigneten Basen neutralisiert werden, z. B. mit Natronlauge, Kalilauge, Ammoniak oder organischen Aminen, vorzugsweise tertiären Aminen, insbesondere Trialkylaminen mit vorzugsweise 1 bis 4 C-Atomen in der Alkylgruppe wie z. B. Triethylamin.

Monomere c)

Die Monomerenmischung kann optional mindestens ein weiteres, von den Monomeren a) und b) verschiedenes Monomer c) enthalten. Die Monomere c) können z.B. von 0 bis 10 Gew.-% oder von 0 bis 5 Gew.-%, insbesondere von 0,1 bis 10 Gew.-% oder von 0,1 bis 5 Gew.-% oder von 0,2 bis 3 Gew.-%, bezogen auf die Gesamtmenge an Monomeren eingesetzt werden.

Monomere c) sind beispielsweise neutrale bzw. nichtionische Monomere mit erhöhter Wasserlöslichkeit, z.-B. die Amide oder die N-Alkylolamide der vorgenannten Carbonsäuren, beispielsweise Acrylamid, Methacrylamid, N-Methylolacrylamid, N-Methylolmethacrylamid oder Phenyloxyethylglykolmono(meth)acrylat. Weitere Monomere c) sind z. B. auch Hydroxylgruppen enthaltende Monomere, insbesondere die Hydroxyalkylester der vorgenannten alpha,beta-monoethylenisch ungesättigten Carbonsäuren, vorzugsweise $C_1$-$C_{10}$-Hydroxyalkyl(meth)acrylate wie z. B. Hydroxyethylacrylat, Hydroxyethylmethacrylat, Hydroxypropylacrylat oder Hydroxypropylmethacrylat sowie 4-Hydroxybutylacrylat. Weitere Monomere c) sind z. B. auch Aminogruppen enthaltende Monomere, insbesondere die Aminoalkylester der vorgenannten alpha,beta-monoethylenisch ungesättigten Carbonsäuren, vorzugsweise $C_1$-$C_{10}$-Aminoalkyl(meth)acrylate wie z. B. 2-Aminoethyl-(meth)acrylat oder tert.-Butylaminoethylmethacrylat. Weiterhin kommen als Monomere c) die Nitrile alpha,beta -monoethylenisch ungesättigter C3-C8-Carbonsäuren, wie z. B. Acrylnitril oder Methacrylnitril in Betracht. Geeignete Monomere c) sind auch bifunktionelle Monomere, die neben einer ethylenisch ungesättigten Doppelbindung wenigstens eine Glycidylgruppe, Oxazolingruppe, Ureidogruppe, ureido-analoge Gruppe oder Carbonylgruppe aufweisen. Beispiele für Monomere mit Glycidylgruppe sind ethylenisch ungesättigte Glycidylether und Glycidylester, z. B. Vinyl-, Allyl- und Methallylglycidylether, Glycidyl(meth)acrylat. Beispiele für Monomere mit Carbonylgruppe sind die Diacetonylamide der obengenannten ethylenisch ungesättigten Carbonsäuren, z. B. Diaceton(meth)acrylamid und die Ester der Acetylessigsäure mit den obengenannten Hydroxyalkylestern ethylenisch ungesättigter Carbonsäuren, z. B. Acetylacetoxyethyl(meth)acrylat. Beispiele für Monomere c) mit Oxazolingruppe sind 2-Vinyl-2-oxazolin und 2-Isopropenyl-2-oxazolin. Beispiele für Monomere c) mit Ureidogruppe sind Ureidoalkyl-(meth)acrylate mit 1 bis 10 C-Atomen, vorzugsweise mit 2 bis 4 C-Atomen in der Alkylgruppe, insbesondere Ureidoethylmethacrylat (UMA).

Beispiele für Monomere c) sind auch vernetzende Monomere, welche mehr als eine radikalisch polymerisierbare Gruppe aufweisen, insbesondere zwei oder mehr (Meth)acrylatguppen wie z. B. Butandioldi(meth)acrylat oder Allylmethacrylat.

Monomere c) sind auch solche, die die Nachvernetzung des Polymers, beispielsweise mit polyfunktionellen Aminen, Hydraziden, Isocyanaten oder Alkoholen ermöglichen. Eine Vernetzung ist auch durch Metallsalzvernetzung der Carboxylgruppen möglich unter Verwendung von mehrwertigen Metallkationen, z. B. Zn oder AI.

Eine geeignete Vernetzung kann z. B. dadurch erfolgen, dass das Polymer Keto- oder Aldehydgruppen enthält (vorzugsweise 0,0001 bis 1 Mol, oder 0,0002 bis 0,10 Mol, oder 0,0006 bis 0,03 Mol) und die Polymerdispersion zusätzlich eine Verbindung enthält mit mindestens 2 funktionellen Gruppen, insbesondere 2 bis 5 funktionellen Gruppen, die mit den Keto- oder Aldehydgruppen eine Vernetzungsreaktion eingehen. Die Keto- oder Aldehydgruppen können durch Copolymerisation von geeigneten Monomeren c) an das Polymer gebunden. Geeignete Monomere c) sind z.B. Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto- oder Aldehydgruppen bzw. einer Aldehyd- und einer Ketogruppe im Alkylrest, wobei der Alkylrest vorzugsweise insgesamt 3 bis 10 C-Atome umfasst, z. B. (Meth)acryloxyalkylpropanale. Des Weiteren eignen sich auch N-Oxoalkyl(meth)acrylamide. Besonders bevorzugt sind Acetoacetyl(meth)acrylat, Acetoacetoxyethyl(meth) acrylat und insbesondere Diacetonacrylamid. Verbindungen, die mit den Keto- oder Aldehydgruppen eine Vernetzungsreaktion eingehen können sind z. B. Verbindungen mit Hydrazid-, Hydroxylamin-, Oximether- oder Aminogruppen. Geeignete Verbindungen mit Hydrazidgruppen sind z. B. Polycarbonsäurehydrazide mit einem Molgewicht von bis zu 500 g/mol. Bevorzugte Hydrazidverbindungen sind Dicarbonsäuredihydrazide mit bevorzugt 2 bis 10 C-Atomen. Genannt seien z. B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin. Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein. Die Menge der Verbindung mit dem funktionellen Gruppen wird vorzugsweise so bemessen, dass das Molverhältnis der funktionellen Gruppen zu den Keto-und/oder Aldehydgruppen des Polymeren 1 : 10 bis 10 : 1, insbesondere 1 : 5 bis 5 : 1, besonders bevorzugt 1 : 2 bis 2 : 1 und ganz besonders bevorzugt 1 : 1,3 bis 1,3 : 1 beträgt. Insbesondere sind äquimolare Mengen der funktionellen Gruppen und der Keto- und/oder Aldehydgruppen bevorzugt.

Ein besonders bevorzugtes Polymer ist hergestellt aus

a1) 80 bis 90 Gew.-% bezogen auf die Gesamtmenge an Monomeren, mindestens eines weichen C2- bis C20-Alkyl(meth)acrylatmonomers welches, wenn es als Homopolymer polymerisiert ist, eine Glasübergangstemperatur von weniger als 0 °C aufweist,

a2) 1 bis 15 Gew.-% bezogen auf die Gesamtmenge an Monomeren, mindestens eines harten C1- bis C20-Alkyl(meth)acrylatmonomers welches, wenn es als Homopolymer polymerisiert ist, eine Glasübergangstemperatur von mehr als 0 °C aufweist

a3) 1 bis 5 Gew.-% Styrol,

b) 0,1 bis 5 Gew.-%, bezogen auf die Gesamtmenge an Monomeren, mindestens eines Monomeren mit mindestens einer Säuregruppe; und

c) optional mindestens einem weiteren, von den Monomeren a) und b) verschiedenen Monomer.

Die Glasübergangstemperatur des Polymers ist vorzugsweise kleiner oder gleich 15 °C. Für Anwendungen als Haftklebstoff ist die Glasübergangstemperatur des Polymers vorzugsweise kleiner oder gleich 0 °C, besonders bevorzugt -60°C bis 0°C oder -60 bis -10 °C und ganz besonders bevorzugt -55 bis -20 °C. Für Anwendungen als Laminierklebstoff ist die Glasübergangstemperatur des Polymers vorzugsweise größer als -20 °C, z. B. von -15 bis +15 °C.

Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + \ldots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Die Polymerdispersionen sind durch radikalische Emulsionspolymerisation von ethylenisch ungesättigten Verbindungen (Monomeren) erhältlich. Die Polymerisation erfolgt dabei vorzugsweise emulgatorfrei oder emulgatorarm in dem Sinne, dass weniger als 0,8, vorzugsweise kleiner oder gleich 0,5 Gewichtsteile Emulgator, bezogen auf 100 Gewichtsteile Monomere, zur Stabilisierung der erfindungsgemäßen Polymerdispersion zugesetzt werden. Emulgatoren sind der Polymerisationsmischung vor oder nach der Polymerisation zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Vorzugsweise wird insgesamt weniger als 0,3 Gew.-Teile oder weniger als 0,2 Gew.-Teile Emulgator, z. B. von 0,05 bis 0,8 Gew.-Teile, oder von 0,05 bis 0,5 Gew.-Teile, oder von 0,05 bis 0,3 Gew.-Teile, bezogen auf 100 Gewichtsteile Monomere oder kein Emulgator verwendet.

Bei der Polymerisation kann mindestens ein Molekulargewichtsregler eingesetzt werden. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylhexylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol. Bevorzugt sind 2-Ethylhexylthioglycolat (EHTG), Isooctyl-3-mercaptopropionat (IOMPA) und tert.-Dodecylmercaptan (tDMK).

Die Polymerisation kann saatkontrolliert erfolgen, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, oder von 0,03 bis kleiner oder gleich 0,1 Gew.-Teilen bezogen auf 100 Gewichtsteile Monomere. Geeignet ist z.B. ein Latex auf Basis von Polystyrol oder auf Basis von Polymethylmethacrylat. Ein bevorzugter Saatlatex ist Polystyrolsaat.

Die Herstellung der Polymerdispersion kann durch Emulsionspolymerisation erfolgen. Bei der Emulsionspolymerisation werden ethylenisch ungesättigte Verbindungen (Monomere) in Wasser polymerisiert, wobei üblicherweise ionische und/oder nicht -ionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Vorzugsweise erfolgt aber die Polymerisation emulgatorarm und vorzugsweise ohne Zusatz oder Bildung von Schutzkolloiden. Die Stabilisierung der entstehenden Polymerdispersion kann durch eine spezielle Fahrweise erfolgen, z. B. mit einem langsamen anfänglichen Monomerzulauf in Gegenwart von sehr geringer Menge an Polymersaat (Saatkontrolle), gefolgt von der Neutralisation der verwendeten Säuremonomeren im Verlauf der Polymerisation.

Die Emulsionspolymerisation kann mit wasserlöslichen Initiatoren gestartet werden. Wasserlösliche Initiatoren sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130°C, vorzugsweise bei 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Bei der Polymerisation kann zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 60 Gew.-%, besonders bevorzugt größer oder gleich 50 Gew.-% erhalten.

Der pH-Wert der Polymerdispersion wird vorzugsweise auf pH größer 5, insbesondere auf einen pH-Wert zwischen 5,5 und 8 eingestellt.

Die erfindungsgemäßen Polymerdispersionen können in wässrigen Klebstoffzubereitungen verwendet werden, z. B. als Haftklebstoff oder für die Herstellung von Laminaten, d. h. in wässrigen Kaschierklebstoffzubereitungen zum Verkleben von großflächigen Substraten, insbesondere für die Herstellung von Verbundfolien.

Gegenstand der Erfindung ist deshalb auch die Verwendung der hierin beschriebenen Polymerdispersionen als Klebstoff, z. B. als Haftklebstoff oder als Laminierklebstoff, insbesondere als Laminierklebstoff, z. B. für die Herstellung von Verbundfolien.

Gegenstand der Erfindung sind auch Verbundfolien, hergestellt aus einer ersten und mindestens einer zweiten Polymerfolie, welche miteinander verklebt sind unter Verwendung eines Klebstoffs enthaltend die hierin beschriebene, erfindungsgemäße wässrige Polymerdispersion.

Aufgrund der optischen guten Beschichtungsbilder eignet sich die Polymerdispersionen besonders gut für die Herstellung von transparenten Produkten, z. B. Verbundfolien, bei denen mindestens eine der Polymerfolien transparent ist oder die gesamte Verbundfolie transparent ist.

Die vorliegende Erfindung betrifft auch ein Verfahren zur Herstellung von Verbundfolien, wobei eine hierin beschriebene wässrige Polymerdispersion zur Verfügung gestellt wird und mindestens zwei Folien unter Verwendung der wässrigen Polymerdispersion miteinander verklebt werden. Hierbei können die wässrigen Polymerdispersionen als solche oder nach Konfektionierung mit üblichen weiteren Hilfsstoffen eingesetzt werden. Übliche Hilfsstoffe sind beispielsweise Vernetzer, Verdicker, Lichtschutzstabilisatoren, Biozide usw.

Bei dem Verfahren zur Herstellung von Verbundfolien werden mindestens zwei Folien unter Verwendung der

EP 3 781 636 B1

wässrigen Polymerdispersion miteinander verklebt. Dabei wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 g/m², besonders bevorzugt 1 bis 7 g/m² z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z. B. 20 bis 200 °C, vorzugsweise 20 bis 100 °C und der Druck z. B. 100 bis 3000 kN/m², vorzugsweise 300 bis 2000 kN/m² betragen kann.

Die erfindungsgemäße Polymerdispersion kann als Einkomponentenmittel angewendet, d. h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine Vernetzungskomponente, wie z. B. ein wasseremulgierbares Isocyanat, zugesetzt wird. Wenigstens eine der Folien kann auf der mit dem Klebstoff beschichteten Seite bedruckt oder metallisiert sein. Als Substrate eignen sich z. B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz: metallisierte Folien) oder Metallfolien, z. B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie, hergestellt unter Verwendung einer der oben beschriebenen erfindungsgemäßen wässrigen Polymerdispersionen, wobei das Material einer ersten Folie ausgewählt ist aus OPP, CPP, PE, PET und PA und wobei das Material einer zweiten Folie ausgewählt ist aus OPP, CPP, PE, PET, PA und Metallfolie. In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert. Die Dicke der Substratfilme kann beispielsweise von 5 bis 100 $\mu$m, vorzugsweise von 5 bis 40 $\mu$m betragen.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z. B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z. B. Barriereschichten, Druckschichten, Farb- oder Lackschichten oder Schutzschichten. Die funktionalen Schichten können sich dabei außen, d. h. auf der mit Klebstoff beschichteten Seite abgewandten Seite des Foliensubstrats oder innen, zwischen Foliensubstrat und Klebstoffschicht befinden.

Besondere Vorteile der erfindungsgemäßen Produkte sind insbesondere:

- ausgezeichnete Beschichtungsbilder ohne optische Filmstörung von beschichteten Folien und ohne negativen Auswirkung auf das Klebergebnis
- gute Entschäumung und gute Benetzung von Foliensubstraten

Vorzugsweise werden das Di- oder Monoalkylsulfosuccinat (B) und das Ethylenoxid/Propylenoxid Blockcopolymer (C) vor der Zugabe zur wässrigen Polymerdispersion vorgemischt. Dadurch kann ein Gelieren am Eintropf-Punkt vermieden werden, wie es ansonsten bei Zugabe von Di- oder Monoalkylsulfosuccinat zu wässrigen Polymerdispersionen auftreten kann.

Beispiele

Abkürzungen und Einsatzstoffe

EO    Ethylenoxideinheit (-CH2CH2O-)
PO    Propylenoxideinheit (-CH(CH3)CH2O-)

1) Entschäumer

| Foamaster® MO | Mineralöl basiert | |
|---|---|---|
| Foamaster® NO | Basierend auf natürlichen Ölen (Fettsäureester), z.B. Sojaöl, Rapsöl, Sonnenblumenöl | >90% nachwachsende Rohstoffe, frei von Mineralölen und Silikonölen |
| Foamaster® WO | Weißöl mit hydrophoben Partikeln | Pharma grade, Lebensmittelzulassung |
| FoamStar® SI | Silikonöl basiert | |
| FoamStar® PB | Polymer basiert | |
| FoamStar® ED | Polymeremulsion | |
| FoamStar® ST | Polymer basiert, Mineralöl- und/oder Polysiloxanträger | |

Foamaster® WO 2310      Zusammensetzung basierend auf Weißöl und Paraffinwachs
Foamaster® WO 2323      Zusammensetzung basierend auf Weißöl und hydrophobisierten Silikapartikeln
Foamaster® NO 2306      Zusammensetzung basierend auf natürlichen Festtsäureesterölen und anionischen und nichtionischen Tensiden
Foamaster® NO 2331      Zubereitung auf Basis von Glyceriden, C16-18- und C18-ungesättigten hydrophoben Komponenten und nichtionischen Tensiden
FoamStar® ED 2522      wässrige Emulsion von modifiziertem Polydimethylsiloxan
Foamaster® ED 2523      wässrige Emulsion auf Basis Polyalkoxylat, modifizierten Silikonen und Fettsäureestern
FoamStar® SI 2213      modifiziertes Polydimethylsiloxan
FoamStar® ST 2438      modifiziertes Polydimethylsiloxan mit hyperverzweigtem Star-Polymer
FoamStar® PB 2724      modifiziertes Polyalkylenglykol
Tego® Antifoam 2291      Zubereitung basierend auf Mineralöl, frei von hydrophoben Partikeln
Tego® Antifoam 4-94      wässrige Emulsion eines Polyethersiloxans

2) Dialkyl- oder Monoalkylsulfosuccinate Dodecylsulfosuccinat, Natriumsalz (Dialkylsulphosuccinat) Di-Iso-octylsulfosuccinat

Disponil® SUS IC 10      Di-isodecylsulphosuccinat, Natriumsalz
Hydropalat® WE 3475      Di-2-ethylhexylsulphosuccinat, Natriumsalz
Hydropalat® WE 3488      Natrium-1,4-diisodecylsulphonatsuccinat
Lumiten® I-SC      Di-2-ethylhexylsulphosuccinat, Natriumsalz

3) alkoxylierte nichtionische Additive
Hydropalat® WE 3161, 3162, 3164, 3966 Ethylenoxid/Propylenoxid Blockcopolymere

| Hydropalat® | Molgewicht Polypropylenblock | Ethylenoxidanteil Gew. % | Molgewicht (aus OH-Zahl) | Oberflächenspannung[1] |
|---|---|---|---|---|
| WE 3161 | 1750 | 10 | 2000 | 40 mN/m |
| WE 3162 | 1750 | 20 | 2450 | 41 mN/m |
| WE 3164 | 1750 | 40 | 2900 | 41 mN/m |
| [1] DIN 53914, 1 g/l in Wasser, 23 °C | | | | |

Hydropalat® WE 3120    alkoxylierter C12-14-Fettalkohol + 5 EO + 4 PO
Hydropalat® WE 3130    alkoxylierter C10-14-Fettalkohol + 3 EO
Hydropalat® WE 3197    ethoxylierter C9-11-Fettalkohol

4) Klebstoffpolymere
Polymer A:
Polymer A ist hergestellt durch Emulsionspolymerisation aus

| | | |
|---|---|---|
| 86,1 | Gew.-Teilenn- | Butylacrylat |
| 8,9 | Gew.-Teilen | Methylacrylat |
| 2 | Gew.-Teilen | Styrol |
| 2 | Gew-Teilen | Methacrylsäure |
| 1 | Gew.-Teil | Itaconsäure |
| 0,1 | Gew.-Teil | Polystyrolsaat |
| 0,06 | Gew.-Teil | 2-Ethylhexylthioglykolat (Molekulargewichtsregler) |

Neutralisiert mit Ammoniak; Filmoberflächenenergie: 23 mN/m; < 1 % Emulgator

Epotal® FLX 3628: Wässrige Dispersion eines Copolymers auf Basis von Acrylsäureestern und Methacrylsäureestern

Testmethoden

Freie Oberflächenenergie

Messgerät: Drop Shape Analyzer - DSA 100 (Krüss)
folgende Referenzflüssigkeiten wurden eingesetzt (Oberflächenspannung angegeben in mN/m):

| | $\gamma_l$ | $\gamma_l^d$ | $\gamma_l^p$ |
|---|---|---|---|
| entionisiertes Wasser | 72,8 | 21,8 | 51 |
| Formamid | 58,0 | 39,0 | 19,0 |
| Dijodmethan | 50,8 | 50,8 | 0 |

Von den Polymerdispersionen werden mit einem 350 μm Rakel auf einer PET-Folie Filme hergestellt und bei 23°C die Kontaktwinkel zu den drei Referenzflüssigkeiten gemessen.
Aus den gemessenen Kontaktwinkeln wird die freie Oberflächenenergie bestimmt mittels der Owens-Wendt Methode (siehe z. B. Jorda-Vilaplana et al, J. Appl. Sci. 2015, DOI: 10.1002/APP.42391; Owens et al, J. Appl. Polym. Sci. 1969, 13,1741):

$$\gamma_l\,(1 + \cos\theta) \;=\; 2\,(\gamma_s^d\,\gamma_l^d)^{1/2} + 2\,(\gamma_s^p\,\gamma_l^p)^{1/2}$$

$\theta$    Kontaktwinkel zwischen Referenzflüssigkeit und dem getrockneten Film der Dispersion
$\gamma_l$    freie Oberflächenenergie der Referenzflüssigkeit; $\gamma_l = \gamma_l^d + \gamma_l^p$
$\gamma_l^d$    disperser Anteil der freien Oberflächenenergie der Referenzflüssigkeit
$\gamma_l^p$    polarer Anteil der freien Oberflächenenergie der Referenzflüssigkeit
$\gamma_s^d$    disperser Anteil der freien Oberflächenenergie der zu testenden Feststoffoberfläche
$\gamma_s^p$    polarer Anteil der freien Oberflächenenergie der zu testenden Feststoffoberfläche
$\gamma_s$    freie Oberflächenenergie der zu testenden Feststoffoberfläche; $\gamma_s = \gamma_s^d + \gamma_s^p$

Bei Auftragen von $\gamma_l\,(1 + \cos\theta)\,/\,2\,(\gamma_l^d)^{1/2}$ gegen $(\gamma_l^p)^{1/2}\,/\,(\gamma_l^d)^{1/2}$ ergibt sich eine Regressionsgerade mit der Steigung $(\gamma_s^p)^{1/2}$ und dem Schnittpunkt mit der Y-Achse bei $(\gamma_s^d)^{1/2}$. Daraus lässt sich die freie Oberflächenenergie berechnen: $\gamma_s = \gamma_s^d + \gamma_s^p$.

Schaumtest

100 ml Gläschen werden mit 35 ml Dispersion gefüllt und mit 10 ml destilliertem Wasser verdünnt. Anschließend werden die Entschäumer und Benetzungsmittel zugegeben und die Gläschen mit dem Deckel verschlossen.

Der Test wird im Schüttelgerät der Fa. Scandex durchgeführt. Für vergleichende Messungen werden 16 Proben auf einer Schüttelplatte angeordnet und für 10 min bei 100 Hz geschüttelt. Nach Ende des Tests werden Markierungen für die Flüssigphase und für die Phase mit Micro- und Macro-Schaum angebracht. Zur Evaluierung werden Fotos im Abstand von 1, 5 und 10 min gemacht. Das Verhältnis von Micro- zu Macro-Schaum wird nach 5 min ermittelt und als konstant während des Schaumabfalls angesehen.

Die Angabe des Ergebnis erfolgt in % eingetragener Luft.

Berechnungsbeispiel:

$$\% \text{ air} = t(tr)-t(l) *100/ t(l)$$

t(tr) = Dispersionshöhe im Schüttelglas zur Referenzzeit tr in mm
t(l) = Dispersionshöhe im Schüttelglas zur Startzeit in mm

Visuelle Beurteilung des Films (Benetzungsgrad)

Der Dispersionsfilms wird hinsichtlich Strukturbildung visuell beurteilt a) nach 24 Stunden und b) nach 28 Tagen nach Zugabe der zu testenden Zusammensetzung

Die Beurteilung erfolgt nach folgenden Kriterien:

4    deutliche Benetzungsfehler
3    wenige Benetzungsfehler
2    unruhige Struktur des Films, schwierig zu entscheiden ob schon Benetzungsfehler oder noch ein homogener Film
1    sehr gut, keine Benetzungsfehler

Beispiele 1 bis 11 - Vergleichsversuche -

Die wässrige Polymerdispersion des Polymer A wurde mit verschiedenen Mengen an unterschiedlichen Entschäumern versetzt und es wurde der Benetzungsgrad untersucht.

Tabelle 1: Einfluss von Entschäumern auf den Benetzungsgrad

| Nr. | Entschäumer | Entschäumermenge | Benetzung |
|-----|-------------|------------------|-----------|
| 1 | - | 0% | 1 |
| 2 | Foamaster® NO 2306 | 0,2% | 2 |
| 3 | Foamaster® NO 2331 | 0,2% | 2 |
| 4 | Foamaster® WO 2323 | 0,2% | 3 |
| 5 | Foamaster® WO 2310 | 0,2% | 4 |
| 6 | Foamaster® ED 2522 | 0,1% | 3 |
| 7 | Foamaster® ED 2523 | 0,1% | 2 |
| 8 | Foamaster® SI 2213 (Silikonöl enthaltend) | 0,1% | 4 |
| 9 | Foamaster® ST 2438 (Silikonöl enthaltend) | 0,1% | 4 |
| 10 | Tego® Antifoam 2291 (Paraffinöl) | 0,2% | 2 |
| 11 | Tego® Antifoam 4-94 (Polyethersiloxan) | 0,1% | 4 |

Tabelle 1 zeigt, dass ein Zusatz von Silikonentschäumern zu stark strukturierten Dispersionsfilmen mit deutlichen Benetzungsfehlern führen kann (Tabelle 1, Beispiele 8, 9, 11). Auch Entschäumer auf Basis von Weißölen können Benetzungsfehler verursachen, wenn sie ohne weitere Massnahmen eingesetzt weden (siehe Tabelle 1, Versuche 4 und 5).

Beispiele 12 bis 23 - Vergleichsversuche -

Die wässrige Polymerdispersion des Polymer A wurde mit unterschiedlichen Entschäumern und Netzmitteln versetzt und es wurde der Benetzungsgrad und das Schaumverhalten untersucht.

Tabelle 2: Einfluss von Entschäumern und anionischem Netzmittel auf den Benetzungsgrad

| Nr. | 0,2% Entschäumer | 0,2% anionisches Netzmittel | Benetzung | Schaum 1 min | Schaum 5 min | Schaum 10min | Schaum Summe |
|-----|------------------|------------------------------|-----------|--------------|--------------|--------------|--------------|
| 12 | - | WE 3475 | 1 | 250 | 200 | 200 | 650 |
| 13 | NO 2331 | WE 3475 | 2 | 50 | 30 | 10 | 90 |
| 14 | WO 2310 | WE 3475 | 2 | 40 | 20 | 0 | 60 |
| 15 | Tego AF 4-94 | WE 3475 | 4 | 60 | 30 | 20 | 110 |
| 16 | SI2213 | WE 3475 | 4 | 200 | 200 | 200 | 600 |
| 17 | PB 2724 | WE 3475 | 1 | 300 | 250 | 250 | 800 |
| 18 | ohne | SUS IC 10 | 1 | 200 | 150 | 50 | 400 |
| 19 | NO 2331 | SUS IC 10 | 2 | 30 | 20 | 10 | 60 |
| 20 | WO 2310 | SUS IC 10 | 2 | 20 | 10 | 0 | 30 |
| 21 | Tego AF 4-94 | SUS IC 10 | 3 | 30 | 10 | 0 | 40 |
| 22 | SI2213 | SUS IC 10 | 3 | 200 | 150 | 150 | 500 |
| 23 | PB 2724 | SUS IC 10 | 1 | 300 | 250 | 250 | 800 |

Tabelle 2 zeigt, dass Sulfosuccinate mit längeren Fettsäureresterketten (SUS IC 10) in Entschäumer enthaltenden wässrigen Polymerdispersionen im direkten Vergleichs jeweils weniger schäumend sind als Sulfosuccinate mit kürzeren Fettsäureresterketten (WE 3475), d.h. der Entschäumer wird besser emulgiert.

Beispiele 23 bis 31

Die wässrige Polymerdispersion des Polymer A wurde mit unterschiedlichen Entschäumern und Netzmitteln versetzt und es wurde der Benetzungsgrad und das Schaumverhalten untersucht.

Tabelle 3: Einfluss von Entschäumern auf den Benetzungsgrad

| Nr. | 0,2% Entschäumer | 0,2% anionisches Netzmittel | 0,1% nichtionisches Netzmittel | Benetzung | Schaum 1 min | Schaum 5 min | Schaum 10min | Schaum Summe |
|---|---|---|---|---|---|---|---|---|
| 23[*)] | - | - | - | | 80 | 50 | 40 | 170 |
| 24[*)] | WO2310 | WE 3475 | WE 3130 | 2 | 50 | 10 | 5 | 65 |
| 25[*)] | WO2310 | WE 3475 | WE 3162 | 1 | 30 | 20 | 10 | 60 |
| 26 | WO2310 | SUS IC 10 | WE 3130 | 2 | 10 | 5 | 5 | 20 |
| 27a | WO2310 | SUS IC 10 | WE 3162 | 1 | 5 | 5 | 5 | 15 |
| 27b | WO2310 | SUS IC 10 | WE 3162 | 1 | 10 | 10 | 0 | 20 |
| 28[*)] | PB 2724 | WE 3475 | WE 3130 | 2 | 400 | 400 | 350 | 1150 |
| 29[*)] | PB 2724 | WE 3475 | WE 3162 | 1 | 400 | 400 | 350 | 1150 |
| 30[*)] | PB 2724 | SUS IC 10 | WE 3130 | 2 | 350 | 300 | 300 | 950 |
| 31[*)] | PB 2724 | SUS IC 10 | WE 3162 | 1 | 300 | 300 | 300 | 900 |

[*)] Vergleich

Tabelle 3 zeigt, dass Sulfosuccinate mit kürzeren Fettsäureresterketten (WE 3475) in Kombination mit stark hydrophoben Weissöl/Wachs-Entschäumern (Foamaster® WO 2310) in wässrigen Polymerdispersionen stärker schäumend sind als Sulfosuccinate mit längeren Fettsäureresterketten (SUS IC 10).

Beispiele 32 bis 34

Für einen Vergleich der Entschäumerwirkung von Silikonöl gegenüber Weißöl wurden wässrige Polymerdispersionen mit Entschäumern auf Basis von Weißöl bzw. auf Basis von Silikonöl sowie mit Netzmitteln versetzt und das kurzfristige und das langfristige Schaumverhalten untersucht.

Tabelle 4.1: Zusammensetzung der Beispiele 32 bis 34

| Nr. | Polymer | ED 2522 | WO2310 | SUS IC 10 | WE3120 | WE3475 |
|---|---|---|---|---|---|---|
| 32*) | Polymer A | | - | | | |
| 33*) | Epotal® FLX 3628 | 0,1% | - | 0,1% | 0,1% | 0,1% |
| 34 | Epotal® FLX 3628 | | 0,1% | 0,1% | 0,1% | 0,1% |
| *) Vergleich | | | | | | |

Tabelle 4.2: Schaumverhalten der Beispiele 32 bis 34

| Nr. | Nach 1 Tag 23 °C | | | | Nach 14 Tagen 40°C Lagerung | | | |
|---|---|---|---|---|---|---|---|---|
| | Schaum 1 min | Schaum 5 min | Schaum 10min | Schaum Summe | Schaum 1 min [1] | Schaum 5 min [1] | Schaum 10min [1] | Schaum Summe [1] |
| 32*) | 200 | 100 | 100 | 400 | 200 | 200 | 190 | 590 |
| 33*) | 150 | 90 | 90 | 330 | 200 | 200 | 190 | 590 |
| 34 | 10 | 10 | 10 | 30 | 30 | 20 | 10 | 60 |
| *) Vergleich; [1] Entschäumerwirkung nach 14 Tage Wärmelagerung bei 40 °C | | | | | | | | |

Beispiele 35 - 41

Die wässrige Polymerdispersion des Polymer A wurde mit Entschäumern und Netzmitteln versetzt und es wurde der Benetzungsgrad und das Schaumverhalten untersucht.

Tabelle 5.1: Zusammensetzungen der Polymerdispersionen; Mengenangaben in Gewichtsteilen

| Nr. | Polymerdispersion | Foamaster® WO 2310 | Na-Dodecylsulfosuccinat | Additiv Hydropalat® ... | Benetzung |
|---|---|---|---|---|---|
| 35*) | 100 Polymer A | 0 | 0 | 0 | 4 |
| 36*) | 100 Polymer A | 0,1 | 0,2 | 0,1 WE 3120 | 4 |
| 37*) | 100 Polymer A | 0,1 | 0,2 | 0,1 WE 3130 | 4 |
| 38 | 100 Polymer A | 0,1 | 0,2 | 0,1 WE 3161 | 2 |
| 39 | 100 Polymer A | 0,1 | 0,2 | 0,1 WE 3162 | 1 |
| 40 | 100 Polymer A | 0,1 | 0,2 | 0,1 WE 3164 | 1 |
| 41*) | 100 Polymer A | 0,1 | 0,2 | 0,1 WE 3197 | 3 |
| *) Vergleich | | | | | |

Tabelle 5.2: Testergebnisse Schaumtest; Angaben in % eingetragener Luft

| Nr. | Nach 1 min | Nach 5 min | Nach 10 min | Summe |
|---|---|---|---|---|
| 35[*] | 200 | 200 | 200 | 600 |
| 36[*] | 190 | 190 | 150 | 530 |
| 37[*] | 180 | 180 | 150 | 510 |
| 38 | 150 | 150 | 130 | 430 |
| 39 | 150 | 150 | 140 | 440 |
| 40 | 150 | 150 | 150 | 450 |
| 41[*] | 200 | 190 | 180 | 570 |
| [*] Vergleich | | | | |

Tabelle 5.3: Testergebnisse Schaumtest nach 1 Woche Lagerung bei 40 °C; Angaben in % eingetragener Luft

| Nr. | Nach 1 min | Nach 5 min | Nach 10 min | Summe |
|---|---|---|---|---|
| 35[*] | 200 | 200 | 150 | 550 |
| 36[*] | 200 | 150 | 120 | 470 |
| 37[*] | 150 | 100 | 100 | 350 |
| 38 | 150 | 120 | 90 | 360 |
| 39 | 180 | 150 | 100 | 430 |
| 40 | 200 | 200 | 120 | 520 |
| 41[*] | 200 | 300 | 150 | 650 |
| [*] Vergleich | | | | |

Beispiel 42

Bei der Zugabe von Hydropalat® WE 3488 (Dialkylsulfosuccinat) und Hydropalat® WE 3162 (Ethylenoxid/Propylenoxid Blockcopolymer) hat es sich als besonders vorteilhaft erwiesen, diese beiden Benetzungsadditive vor der Zugabe zur Polymerdispersion vorzumischen. Damit kann ein Gelieren am Eintropf-Punkt vermieden werden, wie es ansonsten bei Zugabe von Dialkylsulfoscuccinaten auftreten kann. Folgende Tabelle 6 gibt das Gelierungsverhalten für verschiedene Additive und Kombinationen wieder.

Tabelle 6: Gelierungsverhalten

|  | 20% wässrige Lösung | 40% wässrige Lösung | 60% wässrige Lösung | 80% wässrige Lösung |
|---|---|---|---|---|
| Lumiten® I-SC (Sulfosuccinate Type) | Trübe / eingschlossene Luftblasen | Gelierte Masse / eingeschlossene Luftblasen/ nicht fließ fähig | Gelierte Masse / eingeschlossene Luftblasen/ nicht fließ fähig | Klar/ mit eingeschlossenen Luftblasen |
| Hydropalat® WE 3488 | Trübe / ohne eingeschlossene Luftblasen | Dickflüssig / eingeschlossen Luftblasen | Dickflüssig / eingeschlossene Luftblasen | Leicht trübe / ohne Luftblasen |
| Hydropalat® WE 3488/ Hydropa-lat® 3162 (1: 1) Vormischung | Leicht bewegliche, klare Flüssigkeit | Leicht bewegliche, klare Flüssigkeit | Leicht bewegliche, klare Flüssigkeit | Leicht bewegliche, klare Flüssigkeit |

**Patentansprüche**

1. Zusammensetzung enthaltend

   (A) mindestens eine Entschäumermischung enthaltend (i) mindestens ein Öl ausgewählt aus aromaten-freien Weiss-Ölen und natürlichen Fettsäureölen und (ii) hydrophoben Partikeln, vorzugsweise Wachspartikeln oder hydrophobisierten Silikapartikeln;
   (B) mindestens ein Di- oder Monoalkylsulfosuccinat, wobei die Alkylgruppen jeweils mindestens 9 C-Atome aufweisen;
   (C) mindestens ein Ethylenoxid/Propylenoxid Blockcopolymer mit einem Molekulargewicht von 1000 bis 3000 und einem Ethylenoxidanteil von 10 bis 40 Gew.-%, bezogen auf das Blockcopolymer.

2. Zusammensetzung gemäß Anspruch 1, **dadurch gekennzeichnet, dass** das Öl ein Weißöl ist.

3. Zusammensetzung gemäß einem der vorhergehenden Ansprüche, **dadurch gekennzeichnet, dass** die hydrophoben Partikel Wachspartikel sind und ausgewählt sind aus Distearylethylendiamid, Paraffinwachsen, Esterwachsen, Fettalkoholwachsen und Fettsäureamiden, wobei die Menge an Ölen in der Entschäumermischung vorzugsweise von 80 bis 90 Gew.-% und die Menge an Wachspartikeln in der Entschäumermischung vorzugsweise von 1 bis 9 Gew.-% beträgt.

4. Zusammensetzung gemäß einem der vorhergehenden Ansprüche, **dadurch gekennzeichnet, dass** die die Alkylgruppen der Di- oder Monoalkylsulfosuccinate 10 bis 20 C-Atome aufweisen.

5. Zusammensetzung gemäß einem der vorhergehenden Ansprüche, **dadurch gekennzeichnet, dass** die Ethylenoxid/Propylenoxid Blockcopolymere eine Oberflächenspannung von größer oder gleich 40 mN/m, gemessen in Lösung in destilliertem Wasser bei 23°C und bei einer Konzentration von 1 g/l gemäß DIN EN 14370:2004-11; und/oder einen Trübungspunkt gemäß DIN EN 1890:2006 von größer als 23 °C aufweisen.

6. Zusammensetzung gemäß einem der vorhergehenden Ansprüche, enthaltend

   0,8 bis 1,2 Gewichtsteile der Entschäumermischung (A),
   1,6 bis 2,4 Gewichtsteile des mindestens einen Di- oder Monoalkylsulfosuccinats (B) und
   0,8 bis 1,2 Gewichtsteile des mindestens einen Ethylenoxid/Propylenoxid Blockcopolymers (C).

7. Verwendung der Zusammensetzung nach einem der Ansprüche 1 bis 6 als Formulierungsadditiv für wässrige Dispersionen hydrophober Polymere mit einer freien Oberflächenenergie der Polymerfilme von kleiner als 35 mN/m.

8. Wässrige Polymerdispersion enthaltend

   (i) Zusammensetzung gemäß einem der Ansprüche 1 bis 6 und
   (ii) mindestens ein in wässriger Phase dispergiertes hydrophobes Polymer mit einer freien Oberflächenenergie der Polymerfilme von kleiner als 35 mN/m.

9. Wässrige Polymerdispersion gemäß dem vorhergehenden Anspruch, **dadurch gekennzeichnet, dass** die Polymerdispersion weniger als 1 Gew.-% an von den Komponenten (B) und (C) verschiedenen Emulgatoren mit einer Oberflächenspannung kleiner 25 mN/m enthält.

10. Wässrige Polymerdispersion gemäß einem der Ansprüche 8 bis 9, **dadurch gekennzeichnet, dass** die Glasübergangstemperatur des Polymers kleiner oder gleich 15 °C beträgt, gemessen durch Differential Scanning Calorimetrie gemäß ASTM D 3418-08 mit einer Heizrate von 20 °C/min.

11. Wässrige Polymerdispersion gemäß einem der Ansprüche 8 bis 10, **dadurch gekennzeichnet, dass** das Polymer hergestellt ist aus

    a) mindestens 60 Gew.-%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe; und
c) optional mindestens einem weiteren, von den Monomeren a) und b) verschiedenen Monomer.

**12.** Wässrige Polymerdispersion gemäß dem vorhergehenden Anspruch, **dadurch gekennzeichnet, dass** die Monomere a) in einer Menge von mindestens 80 Gew.-%, bezogen auf die Gesamtmenge der Monomere, eingesetzt werden und ausgewählt sind aus der Gruppe bestehend aus C1- bis C10-Alkylacrylaten, C1- bis C10-Alkylmethacrylaten, Styrol und deren Gemisch; und die Monomer b) in einer Menge von 0,5 bis 5 Gew.-%, bezogen auf die Gesamtmenge der Monomere, eingesetzt werden und ausgewählt sind aus der Gruppe bestehend aus Acrylsäure, Methacrylsäure, Itaconsäure und deren Gemisch.

**13.** Wässrige Polymerdispersion gemäß einem der Ansprüche 8 bis 12, **dadurch gekennzeichnet, dass** das Polymer ein Styrol/Acrylat Copolymer ist.

**14.** Verwendung der Polymerdispersion gemäß einem der Ansprüche 8 bis 13 als Klebstoff, insbesondere für die Herstellung von Verbundfolien.

**15.** Verbundfolie, hergestellt aus einer ersten und mindestens einer zweiten Polymerfolie, welche miteinander verklebt sind unter Verwendung eines Klebstoffs enthaltend die wässrige Polymerdispersion gemäß einem der Ansprüche 8 bis 13.

**16.** Verbundfolie gemäß dem vorhergehenden Anspruch, **dadurch gekennzeichnet, dass** mindestens eine der Polymerfolien transparent ist.

**17.** Verfahren zur Herstellung von Verbundfolien, **dadurch gekennzeichnet, dass** eine wässrige Polymerdispersion gemäß einem der Ansprüche 8 bis 13 zur Verfügung gestellt wird und mindestens zwei Folien unter Verwendung der wässrigen Polymerdispersion miteinander verklebt werden.

**Claims**

**1.** A composition comprising

(A) at least one defoamer mixture comprising (i) at least one oil selected from aromatics-free white oils and natural fatty acid oils and (ii) hydrophobic particles, preferably wax particles or hydrophobized silica particles;
(B) at least one di- or monoalkyl sulfosuccinate, where the alkyl groups each have at least 9 carbon atoms;
(C) at least one ethylene oxide/propylene oxide block copolymer having a molecular weight of 1000 to 3000 and an ethylene oxide proportion of 10% to 40% by weight, based on the block copolymer.

**2.** The composition according to claim 1, wherein the oil is a white oil.

**3.** The composition according to any of the preceding claims, wherein the hydrophobic particles are wax particles and are selected from distearyl ethylenediamide, paraffin waxes, ester waxes, fatty alcohol waxes and fatty acid amides, where the amount of oils in the defoamer mixture is preferably from 80% to 90% by weight and the amount of wax particles in the defoamer mixture is preferably from 1% to 9% by weight.

**4.** The composition according to any of the preceding claims, wherein the alkyl groups of the di- or monoalkyl sulfosuccinates have 10 to 20 carbon atoms.

**5.** The composition according to any of the preceding claims, wherein the ethylene oxide/propylene oxide block copolymers have a surface tension of not less than 40 mN/m, measured in solution in distilled water at 23°C and at a concentration of 1 g/l according to DIN EN 14370:2004-11; and/or have a cloud point according to DIN EN 1890:2006 of above 23°C.

**6.** The composition according to any of the preceding claims, comprising

0.8 to 1.2 parts by weight of the defoamer mixture (A),

1.6 to 2.4 parts by weight of the at least one di- or monoalkyl sulfosuccinate (B) and
0.8 to 1.2 parts by weight of the at least one ethylene oxide/propylene oxide block copolymer (C).

7. The use of the composition according to any of claims 1 to 6 as a formulation additive for aqueous dispersions of hydrophobic polymers having a free surface energy of the polymer films of less than 35 mN/m.

8. An aqueous polymer dispersion comprising

(i) composition according to any one of claims 1 to 6 and
(ii) at least one hydrophobic polymer dispersed in an aqueous phase having a free surface energy of the polymer films of less than 35 mN/m.

9. The aqueous polymer dispersion according to the preceding claim, wherein the polymer dispersion comprises less than 1% by weight of emulsifiers distinct from components (B) and (C) having a surface tension of less than 25 mN/m.

10. The aqueous polymer dispersion according to either of claims 8 to 9, wherein the glass transition temperature of the polymer is not more than 15°C, measured by differential scanning calorimetry according to ASTM D 3418-08 at a heating rate of 20°C/min.

11. The aqueous polymer dispersion according to any of claims 8 to 10, wherein the polymer is produced from

a) at least 60% by weight, based on the total amount of monomers, of at least one monomer selected from the group consisting of C1- to C20-alkyl acrylates, C1- to C20-alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers,
b) at least 0.1% by weight, based on the total amount of monomers, of at least one monomer having at least one acid group; and
c) optionally at least one further monomer distinct from the monomers a) and b).

12. The aqueous polymer dispersion according to the preceding claim, wherein the monomers a) are employed in an amount of at least 80% by weight, based on the total amount of the monomers, and are selected from the group consisting of C1- to C10-alkyl acrylates, C1- to C10-alkyl methacrylates, styrene, and mixtures thereof; and the monomers b) are employed in an amount of 0.5% to 5% by weight, based on the total amount of the monomers, and are selected from the group consisting of acrylic acid, methacrylic acid, itaconic acid, and mixtures thereof.

13. The aqueous polymer dispersion according to any of claims 8 to 12, wherein the polymer is a styrene/acrylate copolymer.

14. The use of the polymer dispersion according to any of claims 8 to 13 as an adhesive, in particular for producing composite films.

15. A composite film produced from a first and at least a second polymer film which are bonded to one another using an adhesive comprising the aqueous polymer dispersion according to any of claims 8 to 13.

16. A composite film according to the preceding claim, wherein at least one of the polymer films is transparent.

17. A method for producing composite films, wherein an aqueous polymer dispersion according to any of claims 8 to 13 is provided and at least two films are bonded to one another using the aqueous polymer dispersion.

**Revendications**

1. Composition contenant

(A) au moins un mélange antimousse contenant (i) au moins une huile choisie parmi les huiles blanches sans aromatiques et les huiles d'acides gras naturels et/ou (ii) les particules hydrophobes, de préférence les particules de cire ou les particules de silice hydrophobisées ;

(B) au moins un di- ou un monoalkylsulfosuccinate, chacun des groupes alkyle comportant au moins 9 atomes de carbone ;

(C) au moins un copolymère à blocs oxyde d'éthylène/oxyde de propylène ayant une masse moléculaire de 1 000 à 3 000 et une teneur en oxyde d'éthylène de 10 à 40 % en poids par rapport au polymère à blocs.

2. Composition selon la revendication 1, **caractérisée en ce que** l'huile est une huile blanche.

3. Composition selon l'une des revendications précédentes, **caractérisée en ce que** les particules hydrophobes sont des particules de cire et sont choisies parmi le distéaryléthylènediamide, les cires de paraffine, les cires d'esters, les cires d'alcools gras et les amides d'acides gras, la quantité d'huiles dans le mélange antimousse étant de préférence de 80 à 90 % en poids et la quantité des particules de cire dans le mélange antimousse étant de préférence de 1 à 9 % en poids.

4. Composition selon l'une des revendications précédentes, **caractérisée en ce que** les groupes alkyle des di- ou monoalkylsulfosuccinates comprennent 10 à 20 atomes de carbone.

5. Composition selon l'une des revendications précédentes, **caractérisée en ce que** les copolymères à blocs oxyde d'éthylène/oxyde de propylène présentent une tension superficielle supérieure ou égale à 40 mN/m, mesurée en solution dans de l'eau distillée à 23 °C et pour une concentration de 1 g/l selon DIN EN 14370 : 2004-11 ; et/ou un point de trouble selon DIN EN 1890 : 2006 supérieur à 23 °C.

6. Composition selon l'une des revendications précédentes, contenant

   0,8 à 1,2 partie en poids du mélange antimousse (A),
   1,6 à 2,4 parties en poids de l'au moins un di- ou monoalkylsulfosuccinate (B) et
   0,8 à 1,2 partie en poids de l'au moins un copolymère à blocs oxyde d'éthylène/oxyde de propylène (C).

7. Utilisation de la composition selon l'une des revendications 1 à 6 en tant qu'additif de formulation pour dispersions aqueuses de polymères hydrophobes présentant une énergie superficielle libre des films polymères inférieure à 35 mN/m.

8. Dispersion aqueuse d'un polymère contenant

   (i) une composition selon l'une des revendications 1 à 6 et
   (ii) au moins un polymère hydrophobe dispersé dans la phase aqueuse, ayant une énergie superficielle libre des films polymères inférieure à 35 mN/m.

9. Dispersion aqueuse d'un polymère selon la revendication précédente, **caractérisée en ce que** la dispersion de polymères contient moins de 1 % en poids d'émulsifiants différents des composants (B) et (C), ayant une tension superficielle inférieure à 25 mN/m.

10. Dispersion aqueuse d'un polymère selon l'une des revendications 8 à 9, **caractérisée en ce que** la température de transition vitreuse du polymère est inférieure ou égale à 15 °C, mesurée par analyse calorimétrique différentielle selon ASTM D 3418-08 avec une vitesse de montée en température de 20 °C/minute.

11. Dispersion aqueuse d'un polymère selon l'une des revendications 8 à 10, **caractérisée en ce que** le polymère est fabriqué à partir de

   a) au moins 60 % en poids, par rapport à la quantité des monomères, d'au moins un monomère choisi dans le groupe consistant en les acrylates d'alkyle en C1 à C20, les méthacrylates d'alkyle en C1 à C20, les esters vinyliques d'acides carboxyliques ayant jusqu'à 20 atomes de carbone, les composés vinylaromatiques ayant jusqu'à 20 atomes de carbone, les halogénures de vinyle, les éthers vinyliques d'alcools ayant 1 à 10 atomes de carbone, les hydrocarbures aliphatiques ayant 2 à 8 atomes de carbone et une ou deux doubles liaisons et les mélanges de ces monomères,
   b) au moins 0,1 % en poids, par rapport à la quantité totale des monomères, d'au moins un monomère ayant au moins un groupe acide ; et
   c) éventuellement au moins un autre monomère, différent des monomères a) et b).

**12.** Dispersion aqueuse d'un polymère selon la revendication précédente, **caractérisée en ce que** les monomères a) sont utilisés en une quantité d'au moins 80 % en poids par rapport à la quantité totale des monomères et sont choisis dans le groupe consistant en les acrylates d'alkyle en C1 à C10, les méthacrylates d'alkyle en C1 à C10, le styrène et un mélange de ceux-ci ; et le monomère b) est utilisé en une quantité de 0,5 à 5 % en poids par rapport à la quantité totale des monomères et est choisi dans le groupe consistant en l'acide acrylique, l'acide méthacrylique, l'acide itaconique et un mélange de ceux-ci.

**13.** Dispersion aqueuse d'un polymère selon l'une des revendications 8 à 12, **caractérisée en ce que** le polymère est un copolymère styrène/acrylate.

**14.** Utilisation de la dispersion de polymères selon l'une des revendications 8 à 13 en tant qu'adhésif, en particulier pour la fabrication de feuilles composites.

**15.** Feuille composite, fabriquée à partir d'une première et d'au moins une seconde feuille polymère, qui sont collées l'une à l'autre par utilisation d'un adhésif contenant la dispersion aqueuse d'un polymère selon l'une des revendications 8 à 13.

**16.** Feuille composite selon la revendication précédente, **caractérisée en ce qu'**au moins l'une des feuilles polymères est transparente.

**17.** Procédé de fabrication de feuilles composites, **caractérisé en ce qu'**on met à disposition une dispersion aqueuse d'un polymère selon l'une des revendications 8 à 13 et que l'on colle l'une à l'autre au moins deux feuilles par utilisation de la dispersion aqueuse d'un polymère.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2930206 A1
- EP 0878224 A1
- EP 0322830 A
- US 20130160676 A1
- WO 2017125277 A

**In der Beschreibung aufgeführte Nicht-Patentliteratur**

- *CHEMICAL ABSTRACTS,* 8042-47-5
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- **J. BRANDRUP, E.H. IMMERGUT.** POLYMER HANDBOOK. J. Wiley, 1975
- **J. BRANDRUP, E.H. IMMERGUT.** POLYMER HANDBOOK. J. Wile, 1989
- **JORDA-VILAPLANA et al.** *J. Appl. Sci.,* 2015
- **OWENS et al.** *J. Appl. Polym. Sci.,* 1969, vol. 13, 1741